# EUROPEAN PATENT APPLICATION

(11) **EP 3 756 988 A1**
(43) Date of publication of application: **30.12.2020**
(21) Application number: 19183205.4
(22) Date of filing: 28.06.2019
(51) Int. Cl.: B62K 21/00

(54) **BICYCLE**

(71) Applicant: Zielinski, Grzegorz, 43-300 Bielsko - Biala (PL)
(72) Inventor: Zielinski, Grzegorz, 43-300 Bielsko - Biala (PL)
(74) Representative: Malcherek, Piotr

(57) **Abstract**

The invention relates to a bicycle (1) having a frame (2) connected with a steering handlebar assembly (3), a front wheel (4), a rear wheel (5) and provided with a pivoting mechanism (10) for the rear wheel (5). The steering handlebar assembly (3) is functionally coupled to the front wheel (4) so that any movements of the steering handlebar assembly (3) lead to deflection of the front wheel (4) with reference to the longitudinal plane (A) of the frame (2). The steering handlebar assembly (3) is also linked to the pivoting mechanism (10) of the rear wheel (5) so that the movements of the steering handlebar assembly (3) also lead to deflection of the rear wheel (5) with reference to the longitudinal plane (A) of the frame, whereas the deflection of the front wheel (4) is opposite to the deflection direction of the rear wheel (5) with reference to the same longitudinal plane (A) of the bicycle frame (2).

## Description

The invention refers to a bicycle that finds broad practical applications, in particular it is used for common transportation tasks, leisure or sports.

The patent description US 8100425 B2 discloses a wheeled vehicle, which may be a bicycle, having independent front and rear wheel steering and relating to the group of vehicles designed for stunts, i.e. special riding effects. The bicycle has a front wheel that is conventionally mounted with the use of a fork and a handlebar and its steering is executed by means of typical methods. The bicycle has also a rear wheel that is pivotally mounted to the frame with independent steering system. The rear wheel steering system is actuated by a control lever mounted on the bicycle frame. The control lever is connected with the rear wheel by means of a flexible cable that passes through hollow frame tubing of the bicycle, where the bicycle has a blocking mechanism for the lever, which opposes unintended steering changes of the rear wheel. Similarly to any commonly known bicycles, the bicycle has a pedal assembly located in its middle part and designed for vehicle propulsion. The driving torque is transmitted to the rear wheel by means of an endless chain extending between the pedal assembly and a rear sprocket. The sprocket provided in the area of the rear wheel transmits the torque from an endless chain to a driving shaft that sets the rear wheel in motion regardless the degree of its pivoting.

In turn, the patent description US 4650023 discloses a system for simultaneous steering a front and a rear wheel of a motorcycle. A motorcycle with a conventional design includes a frame with an engine and its auxiliaries as well as a front and a rear wheels and is provided with a typical steering mechanism for a front wheel. The rear wheel is combined with a suspension system and the drive transmission from the engine to the rear wheel, whereas the torque is transmitted only at one side of the rear wheel and the rear wheel is mounted with the use of a pivotal hub. In addition, the motorcycle is provided with a rear wheel steering mechanism, where the rear wheel steering is carried out with the use of the front wheel fork that comprises a mechanism that includes a pin and a flexible member attached to that pin. The flexible member passes through the entire frame up to the rear wheel, where it is fixed thereto by means of a steering lever located at the side that is opposite to the side of the motorcycle drive. The steering lever of the rear wheel is connected to the rear wheel hub so that lever movements are transferred to turns of the rear wheel. Turns of the motorcycle steering handlebar lead to immediate draws of the flexible member and, in consequence, pulling the pivotal hub of the rear wheel to the same direction as motorcycle steering handlebar and consequential turns of the rear wheel. Owing to application of the flexible member all movements of the rear wheel suspension are easily compensated and are not transferred to the front wheel. The pivot angle of the rear wheel with reference to turns of the steering handlebar and the front wheel is limited to about 20%.

The invention is intended to provide a bicycle design with improved steering performance, regardless of the bicycle application.

The invention refers to a bicycle having a frame with connected a steering handlebar assembly, a front wheel and a rear wheel, where the bicycle is furnished with a mechanism designed to control the rear wheel turns. The steering handlebar assembly is functionally coupled with the front wheel so that any turns of the steering handlebar assembly lead to pivots of the front wheel with reference to the longitudinal plane of the frame, which is disclosed in the preamble to Claim 1. The essence of the invention consists in the fact that the steering handlebar assembly is linked to the pivoting mechanism of the rear wheel, therefore turns of the steering handlebar assembly entail also pivots of the rear wheel with reference to the longitudinal plane of the vehicle, whereas turning directions of the front wheel and pivoting directions of the rear wheel are opposite one to another with reference to the said longitudinal plane.

Preferably, the link between the steering handlebar assembly and the pivoting mechanism for the rear wheel comprises means to change the ratio between the pivoting angle of the rear wheel and the turning angle of the front wheel caused directly by turns of the steering handlebar assembly, such means substantially enhance performance of riding the bicycle. Variable ratio between the pivoting angle of the rear wheel and the turning angle of the front wheel caused directly by turns of the steering handlebar assembly enables versatile improvements in control of the bicycle ride.

It is also beneficial when the steering handlebar assembly is linked to the pivoting mechanism of the rear wheel by means of a set of ties and the means to change the ratio between the pivoting angle of the rear wheel and the turning angle of the front wheel caused directly by turns of the steering handlebar assembly comprise articulated joints, rolls or cams. This enables to benefit from all advantages of the invention and preserve the conventional mechanical structure of bicycles, which facilitates simple maintenance and repairs of such a bicycle with the use of typical tools. In addition, owing to its simplicity, the mechanical structure is highly reliable and offers low failure rate.

Particularly beneficial means to change the ratio between the pivoting angle of the rear wheel and the turning angle of the steering handlebar assembly have a form of an electronic device, which entails simplicity of the ratio changes and programmability features, hence adequate settings for the means to change the ratio between the pivoting angle of the rear wheel and the turning angle of the steering handlebar assembly can be adjusted according to current needs and personal preferences of a user. Such a solution entails further benefits, since other functionalities can be also linked to the means to change the ratio between the turning and pivoting angles, for instance a display for current settings that can be either fixed to a steering handlebar or mounted at another convenient location, clearly visible for a user.

For such an embodiment of the invention it is beneficial when the means to change the ratio between the turning angle of the front wheel and the pivoting angle of the rear wheel are furnished with a sensing device that is able to detect current position of the steering handlebar unit, which helps to reduce the total weight of the bicycle and improve adjustability of the bicycle to individual preferences of riders, in particular when the means to change the ratio between the pivoting angle of the rear wheel and the turning angle of the front wheel caused directly by turns of the steering handlebar are implemented as an electronic, an electrohydraulic or an electromechanical device.

Similarly, it is beneficial to implement the means to change the ratio between the pivoting angle of the rear wheel and the turning angle of the steering handlebar assembly in the form of a hydraulic or an electrohydraulic or an electromechanical device, which makes it possible to achieve opportunities to benefit from a very broad scope of capabilities and advantages offered by each of these solutions.

It is also desirable when the link between the steering handle bar assembly and the pivoting mechanism for the rear wheel comprises a reduction gear to change the ratio between the pivoting angle of the rear wheel and the turning angle of the steering handlebar assembly. Hence, the reduction gear enables change of the ratio between the pivoting angle of the rear wheel and the turning angle of the steering handlebar assembly in such a way that during all phases of turns the pivoting angle of the rear wheel is made less that the turning angle imposed directly by the steering handlebar assembly.

Moreover, it is justified when the reducing ratio between the pivoting angle of the rear wheel and the turning angle of the steering handlebar assembly can be more than 50% when the steering handle bar deflection angle is less than 10°, ranges from 60% to 80% for the steering handlebar deflections from 10° to 40° and exceeds 80% when the steering handlebar deflection angle is more than 40°.

For instance, the reducing ratio for the tuning angle by 80% is understood that for the case when the deflection angle of the front wheel is 50°, the pivoting angle for the rear wheel is only 10°. The variable ratio of the rear wheel pivoting angle as compared to the turning angle enforced by the steering handlebar assembly enables the rider to more versatile control the bicycle. Turns with a long radius that are passed at a high speed with a low turning angle of the steering handlebar need very slight pivoting action of the rear wheel, which guarantees steady control for the bicycle. On the other hand, when the turning radius is short and the turning angle of the handlebar is higher, the pivoting action of the rear wheel must be more intense, which enables better swiveling behavior of the bicycle and easier passing of sharp bends. Since the pivoting angle of the rear wheel is limited, possible collision of the rear wheel against components of the torque transmission system and rear components of the frame that may be also responsible for cushioning of the rear wheel is prevented, which makes the bicycle structure more compact and convenient in use. The ratio between the turning and pivoting angles can be adjusted to conditions of the bicycle track and specific features of bicycle behavior during city journeys or sport races may be taken into account.

Another benefit is achieved when a bicycle is furnished with a speed meter that is functionally linked to means to change the ratio for the rear wheel pivoting angle, and change of the ratio between the pivoting angle of the rear wheel and the turning angle of the steering handle bar assembly depends on the bicycle speed.

For such an embodiment of the invention it is the most beneficial when for speed values below 10 km/h the reduction ratio for the rear wheel pivoting angle with reference to the turning angle of the steering handlebar assembly is less than 50% for the angle of the steering handlebar deflection up to 10° and may range from 10% to 90% when the deflection angle of the steering handlebar is from 10° to 40°, and must be above 80% for deflection angles of the handlebar above 40°.

In turn, when the bicycle speed exceeds 50 km/h it is the most beneficial when the reduction ratio for the rear wheel pivoting angle with reference to the turning angle of the steering handlebar assembly is more than 50% for the angle of the steering handlebar deflection up to 10° and may range from 60% to 95% when the deflection angle of the steering handlebar is from 10° to 40°, and must be above 80% for deflection angles of the handlebar above 40°.

When the reduction ratio for the rear wheel pivoting angle is made dependent on the bicycle speed, the comfort of bicycle riding is substantially improved.

It is also beneficial when the steering handlebar assembly is linked to the mechanism for the rear wheel pivoting by means of a hydraulic system since it simplifies the bicycle design and reduces its own weight as compared to a purely mechanical solution.

It is also desirable when the steering tube of the front fork is connected to a rigid tie by means of a set of articulated joints and cams, whilst a second set of articulated joints and cams with a rigid tie is used for connection to the pivoting mechanism of the rear wheel, where the set of articulated joints and cams is designed to adjust the ratio between the pivoting angle of the rear wheel and the turning angle enforced directly by the steering handlebar assembly. It is achieved by means of a mechanical system that has all advantages of the invention.

It is beneficial when the pivoting mechanism for the rear wheel comprises at least one hydraulic cylinder and/or at least one electromagnetic appliance, which enables exercising of rear wheel pivoting movements by means of the hydraulic or electromagnetic method.

Preferably the bicycle has secondary means to change the ratio between the turning angle of the front wheel and the turning angle enforced by the steering handlebar assembly. It enables further, additional benefits for setting of the bicycle steering system, for instance makes it possible to increase or decrease the ratio between the turning angle of the front wheel and the turning angle enforced directly by the steering handlebar assembly.

The key advantage of the invention that is achieved by opposite directions of the front when and rear wheel deflection with respect to the longitudinal plane of the bicycle frame, where the deflections are executed by a single movement of a steering handlebar, consists in improvement of the bicycle control on turns with increased steering reliability of the bike, and simplified movements of the bicycle on turns and, in particular, U-turns. Substantial improvement of the bicycle maneuverability is particularly visible when the deflection angle of the steering handlebar assembly is pretty high, even up to 90 degrees since even at such a high deflection angle the bicycle is not locked and can keep moving.

It should be clarified that in this description the steering handlebar assembly is understood as any implement that can be used to steer a bicycle and is coupled to the handlebar as such, for instance it can be the handlebar, handlebar handles, steering tube of the front wheel fork, crown of that fork or the handlebar bracket, which all can be used for direct execution of the bicycle handlebar movements.

The invention is presented in its embodiments on the accompanying drawings, wherein:

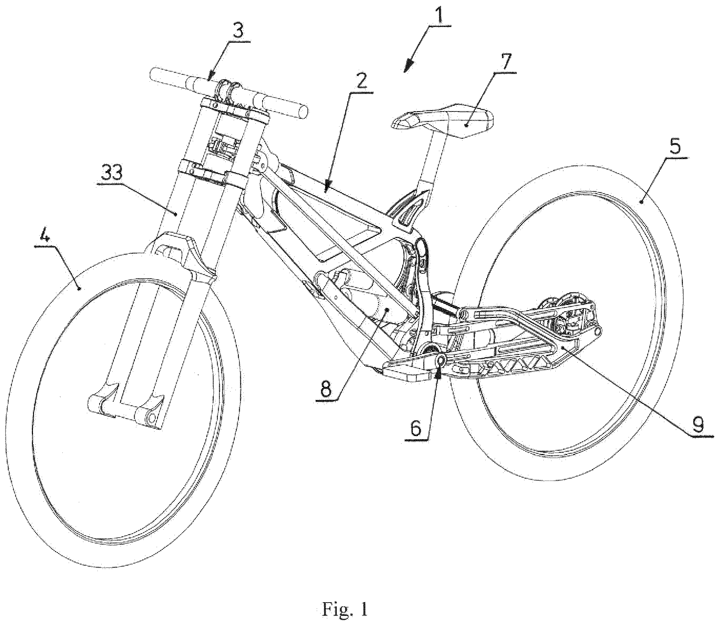

- fig. 1: is a perspective view of a bicycle,

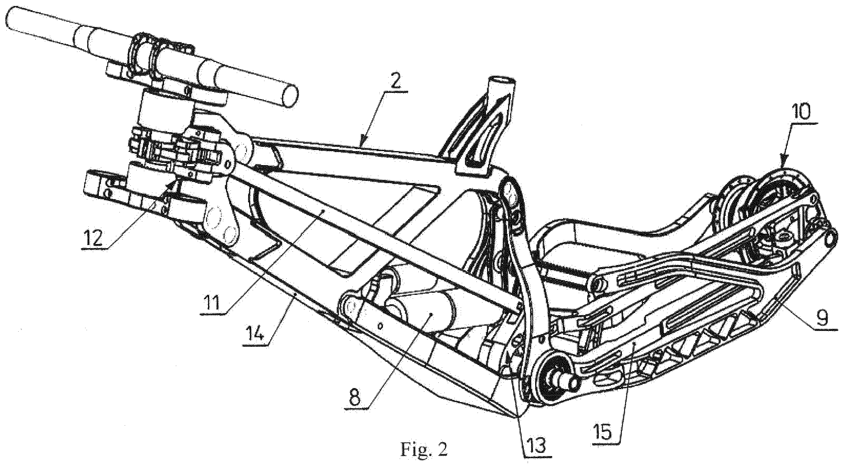

- fig. 2: is a perspective view of a bicycle frame together with a steering system,

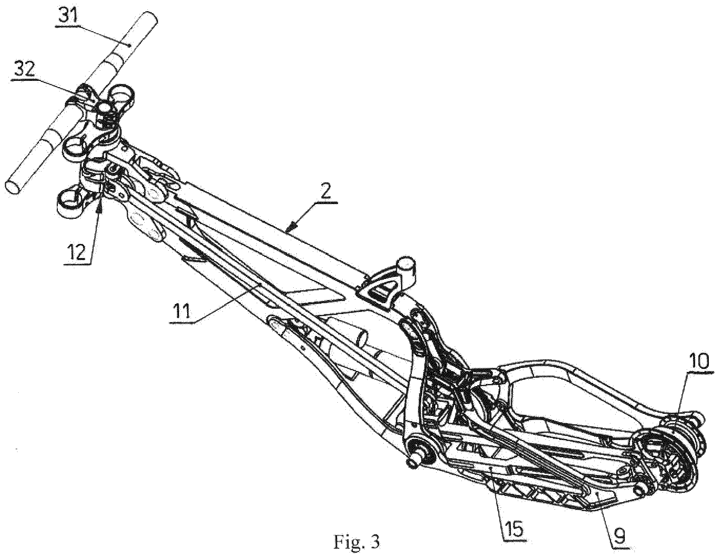

- fig. 3: is another perspective view of the bicycle frame together with a steering system
- fig. 4: is a perspective view of the bicycle steering handlebar assembly,
- fig. 5: is a perspective view of a second set of articulated joints and cams,

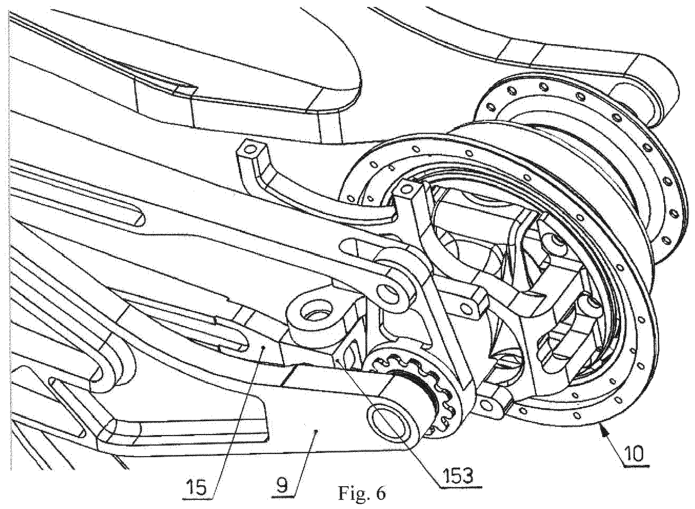

- fig. 6: is a perspective view of the connection between rigid ties and the pivoting mechanism of the rear wheel,
- fig. 7: is a schematic top view of the bicycle,

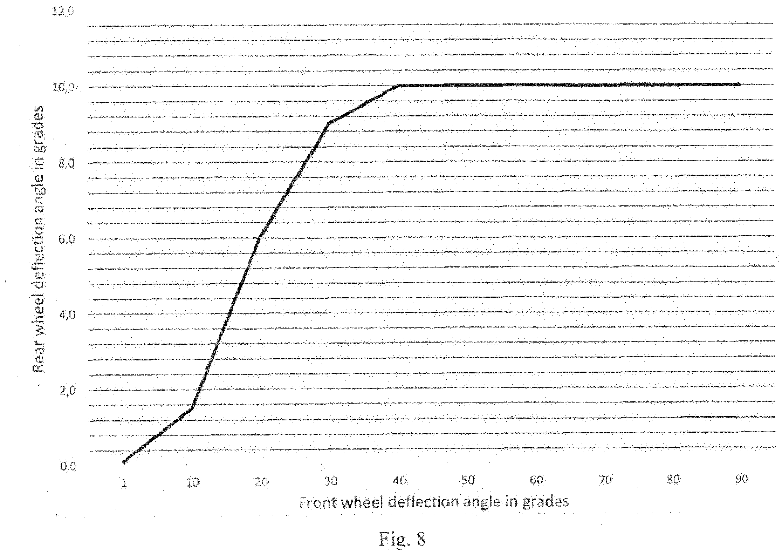

- fig. 8: is a graph that presents the relationship between the front wheel deflection angle and the rear wheel deflection angle,
- fig. 9: is a schematic top view of the bicycle with a schematic image of a hydraulic steering system.

A bicycle 1 has a frame 2 with coupled a steering handlebar assembly 3 as well as a front wheel 4 and a rear wheel 5. The bicycle is propelled by means of a well-known crank assembly 6 seating in the frame 2 together with its support member, which is not shown on the drawing to avoid excessive complications with understanding of the drawing and the invention. The frame has also a slideably adjusted saddle 7. The bicycle 1 is also provided with typical auxiliary equipment, including, for instance, disk brakes.

The steering handlebar assembly 3 incorporated into the bicycle 1 comprises a handlebar 31 that is connected by means of a steering handlebar bracket 32 with a steering tube of the front fork 33. The handlebar 31 is furnished with typical equipment and auxiliaries, such as handlebar handles and brake levers that are not shown in the drawing in details. The front fork 33 is designed as a dual crown shock absorber that has a steerer tube passing through the frame 2 head tube in which there is an axis of rotation of the front fork 33. Furthermore, the bottom part of the fork 33 is used to embrace the axle of the front wheel 4. The steerer tube of the front fork 33 is pivotally mounted in the frame 2 head tube, so that the steering handlebar assembly 3 is functionally coupled with the front wheel 4. Therefore any movements and turns of the steering handlebar 31 lead to pivoting and deflection of the front wheel 4 with respect to the longitudinal plane A of the frame 2.

In turn, the rear wheel 5 of the bicycle 1 is mounted in the rear fork that is connected to the frame 2 by means of an articulated joint, where the connection is also furnished with a shock absorber 8 designed to damp vibrations of the rear wheel 5 and to prolong the time of contact between the rear wheel 5 and ground during off-road riding. Therefore the rear wheel 5 is mounted in a rear fork 9 that makes up a swing arm, which is a suspension system for the rear wheel 5. In addition, the rear wheel 5 of the bicycle 1 is mounted in the rear fork 9 with the use of a pivoting mechanism 10 for the rear wheel 5, where the pivoting mechanism 10 is designed as a hub socket with a pivoting facility. The pivoting mechanism 10 for the rear wheel 5 can be also designed in another ways that are well-known in the state-of-the-art, for instance deflection of the rear wheel 5 can be also achieved by means of an additional shaft.

The bicycle 1 has the steering handlebar assembly 3 that is linked to the pivoting mechanism 10 of the rear wheel 5 and any turns of the steering handlebar assembly 3 also lead to deflections of the rear wheel with reference to the longitudinal plane A of the frame 2, where the directions for the X₁ deflection of the front wheel and the X₂ deflection of the rear wheel with reference to said longitudinal plane A of the frame are mutually opposite.

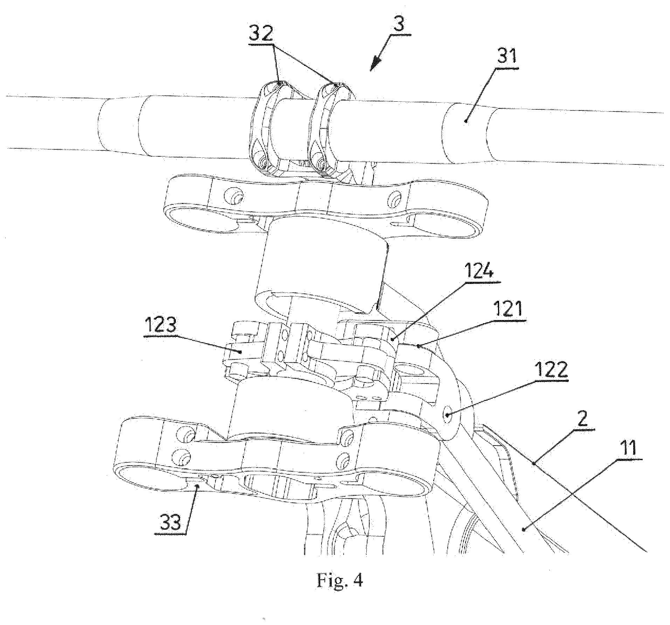

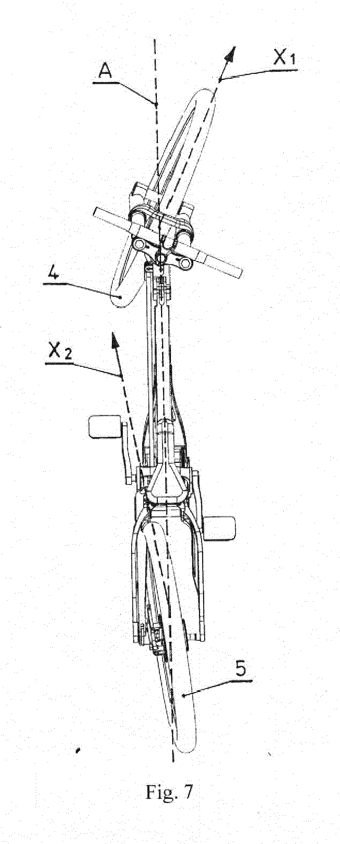

In the first embodiment of the invention the linkage between of the steering handlebar assembly 3 and the pivoting mechanism 10 of the rear wheel is implemented in purely mechanical way with the use of means designed to change the ratio between the pivoting angle of the rear wheel 5 and the turning angle enforced by the steering handlebar assembly 3. The steering handlebar assembly 3 is linked to the pivoting mechanism 10 of the rear wheel 5 by means of rigid ties 11 and 15 that make up longitudinal links to cooperate with means designed to change the pivoting ratio of the rear wheel 5 and implemented as sets 12 and 13 of articulated joints and cams. The first set 12 of articulated joints and cams (fig. 4) is located within the area of the steering handlebar assembly 3, directly nearby the head tube of the frame 2, and is designed with the use of rolls that enable individual components of the said set to move easily. The steering tube of the front fork 33, right below the head tube of the frame 2, is provided with a permanently fixed crosswise cam 123 having rolls attached to the both sides and designed to cooperate with runways implemented in the cam 124, fixed to the frame 2 by means of an articulated joint. By means of two articulated joints 121 and 122 the cam 124 is linked to the rigid tie 11, where the swing axles of the articulated joints 121 and 122 are substantially perpendicular to one another. When the steering crossbar assembly 3 is in the neutral position for straightway riding, the rotation axis of the articulated joint 122 is perpendicular to the longitudinal plane A of the frame 2 and substantially parallel to the ground the bicycle 1 is riding thereon. In turn, the rotation axis of the articulated joint 121 is parallel to the longitudinal plane A of the frame 2 and positioned in parallel to the rotation axis of the steering handlebar assembly 3. In consequence, the first set 12 of articulated joints and cams transfers deflections of the steering handlebar assembly 3 to the rigid tie 11. The crosswise cam 123 as well as the cam 124 that are linked to the steering tube of the front fork 33 are meant to change the ratio between the pivoting angle of the rear wheel 5 and the turning angle enforced directly by the steering handlebar assembly 3. Therefore the angular range of movements transferred from the steering handlebar assembly 3 to the rigid tie 11 is adequately adjusted during specific phases of bicycle turns. The table below as well as fig. 7 present example deflection angles for the steering handlebar assembly 3 against corresponding pivoting angles for the rear wheel 5 with reference to the longitudinal plane A of the frame 2.

| **Front wheel deflection angle in grades** | **Rear wheel deflection angle in grades** |
|---|---|
| 1 | 0.1 |
| 2 | 0.2 |
| 3 | 0.3 |
| 4 | 0.4 |
| 5 | 0.5 |
| 6 | 0.7 |
| 7 | 0.9 |
| 8 | 1.1 |
| 9 | 1.3 |
| 10 | 1.5 |
| 11 | 1.9 |
| 12 | 2.3 |
| 13 | 2.7 |
| 14 | 3.1 |
| 15 | 3.5 |
| 16 | 4.0 |
| 17 | 4.5 |
| 18 | 5.0 |
| 19 | 5.5 |
| 20 | 6.0 |
| 21 | 6.4 |
| 22 | 6.8 |
| 23 | 7.2 |
| 24 | 7.6 |
| 25 | 8.0 |
| 26 | 8.2 |
| 27 | 8.4 |
| 28 | 8.6 |
| 29 | 8.8 |
| 30 | 9.0 |
| 31 | 9.1 |
| 32 | 9.2 |
| 33 | 9.3 |
| 34 | 9.4 |
| 35 | 9.5 |
| 36 | 9.6 |
| 37 | 9.7 |
| 38 | 9.8 |
| 39 | 9.9 |
| 40 | 10.0 |

The foregoing table as well as fig. 7 disclose, how the bicycle 1 benefits from the means to change the ratio between the pivoting angle of the rear wheel 5 and the turning angle caused directly by turns of the steering handlebar assembly 3, i.e. how turns of the bicycle 1 are carried out. Hence, any deflection of the front wheel 4 and simultaneously of the rear wheel 5 with reference to the longitudinal plane A of the frame 2 can be simply referred to as turns. Initially the turns of the steering handlebar assembly are only slightly transferred to pivots of the rear wheel 5 and later on the response of the rear wheel 5 to movements of the steering handlebar assembly is getting significantly higher whilst during the subsequent phase of turns any further deflection of the steering handlebar assembly 3 has a decreasing impact to pivoting movements of the rear wheel 5. For the present embodiment of the invention any further turns of the steering handlebar assembly, above 40°, is significantly restricted. However, other embodiments of the invention are also possible, where further deflections of the steering handlebar assembly within the range from 40° to 90° are no longer transferred to pivots of the rear wheel and the maximum deflection angle for the rear wheel is 10°. It makes it possible to benefit from all advantages of the invention, whilst such a restriction to deflection angle of the rear wheel 5 enables to maintain the compact design of the bicycle frame 2. Alternatively, bicycles with compact design and with small wheels diameters may be allowed to pivot rear wheels 5 by more than 10°.

The general conclusion can be made that the best ranges for the reduction ratio between the rear wheel 5 pivoting angle and the turning angle of the steering handlebar assembly 3 exceed 50% for the handlebar deflection angles less than 10°, range from 60% to 80% for the handlebar deflection angles from 10° to 40° and is above 80% when the steering handlebar turns exceed 40°.

Moreover, it is possible to substitute cams 123 and 124 with different ones and adapt the steering system of the bicycle 1 to intended application, for instance to diminish the turning radius of the bicycle 1 even more owing to increase of the pivoting angle for the rear wheel 5.

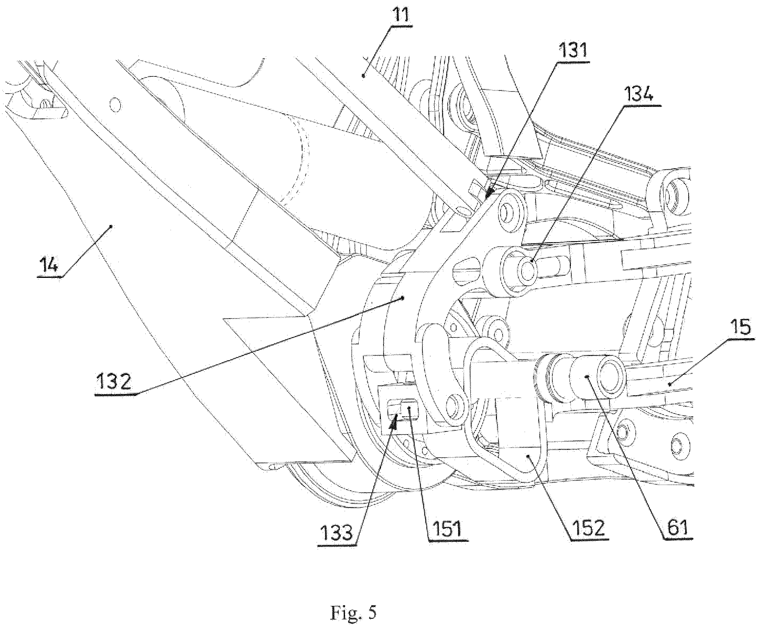

The other end of the rigid tie 11 (fig. 5) is connected to the second set 13 of articulated joints and cams located in the area where two components of the frame meet: a member that corresponds to the seat tube of the frame 2 and its down tube 14. The rigid tie 11, owing to the double articulated joint 131 is linked to the cam 132 pivotally mounted on the axle 134 mounted in the frame 2. The cam 132 of the second set 13 is provided at the end opposite to the double articulated joint 131 with a hole 133 to receive a pivotally mounted protrusion 151 of the rigid tie 15. Therefore movements of the cam 132 trigger displacements of the rigid tie 15 that has the opposite end connected to the pivoting mechanism 10 of the rear wheel 5. The rigid tie 15 in the area of its connection to the cam 132 has a throughout opening 152 designed to embrace the axle 61 of crank fixed to the frame 2. The throughout opening 152 has sufficient dimensions to enable unrestricted movements of the rigid tie 15 in response to pivots of the cam 132 as well as to allow operation of the suspension system of the rear wheel 5. The cam 132 reverses vectors of the rigid tie 11 movements in such a way that if turns of the steering handlebar assembly 3 enforce pulling of the rigid tie 11, the cam pushes the rigid tie 15. In consequence, the rigid tie 15 transmits movements of the steering handlebar assembly 3 to the pivoting mechanism 10 of the rear wheel 5 by repositioning of the pivoted hub of the rear wheel 5, which leads to deflection of the rear wheel 5 with reference to the longitudinal plane A of the frame 2, where the rear wheel deflections are opposite to deflections of the front wheel 4 with reference to the same longitudinal plane A of the frame 2. The rigid tie 15 is linked to the pivoted hub of the rear wheel 5 by means of a double articulated joint 153.

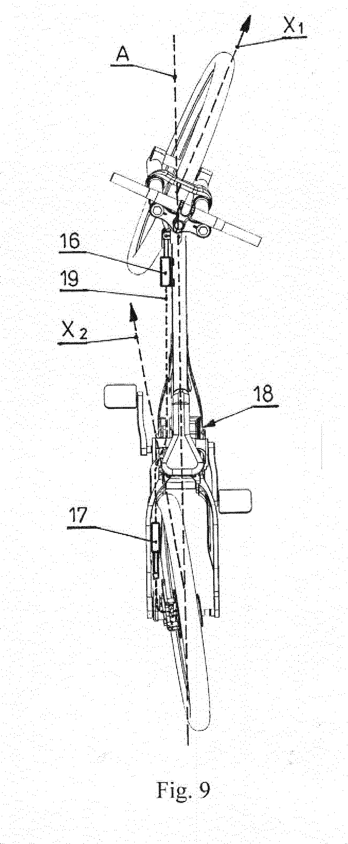

The second embodiment (fig. 9) of the invention that is schematically presented on the drawing applies hydraulic control system. A bicycle of the basic design, as disclosed in the first embodiment of the invention, has a first hydraulic cylinder 16 which cooperates with the steering handlebar assembly and transmits its movements to a hydraulic control system. The entire system of hydraulic control comprises the first hydraulic cylinder 16, an electrohydraulic controller 18 fixed to the frame 2, a second hydraulic cylinder 17 and connecting components of the system, such as hydraulic hoses 19. Turns of the steering handlebar assembly are transferred to the first hydraulic cylinder 16 and transformed into a hydraulic pulse that is transmitted by means of hydraulic hoses to the electrohydraulic control unit 18 designed to process the input signal and issue a hydraulic pulse for the second hydraulic actuator 17 installed on the rear fork and combined with the pivoting mechanism for the rear wheel. For that embodiment of the invention the pivoting mechanism for the rear wheel is controlled by the second hydraulic cylinder 17, whereas the deflection angle of the rear wheel with reference to the longitudinal plane A of the bicycle frame is opposite to deflection of the front wheel with reference to the same longitudinal plane A of the frame. Furthermore, use of and electrohydraulic control unit 18, combined with the first hydraulic cylinder and the second hydraulic cylinder, offers the functionality to adjust the ratio between the pivoting angle of the rear wheel and the turning angle enforced directly by the steering handlebar assembly. The ratio can be adjusted by means of appropriate software with no need to replace mechanical components.

Further embodiments of the invention are also possible, where movements and position of the steering handlebar assembly are detected by an electronic sensor. For such an embodiment the control system comprises an electronic sensor to detect position of the steering handlebar assembly, an electrohydraulic system mounted on the bicycle frame and a hydraulic actuator cooperating with the pivoting mechanism for the rear wheel. As a consequence, the position of the steering handlebar assembly is detected by an electronic sensor and then its signal is transmitted via a wired or wireless line to an electrohydraulic control unit installed on the bicycle frame and designed to issue a relevant signal to a hydraulic cylinder that executes deflection of the rear wheel. For those who are involved in the state-of-the-art is obvious that cylinder or cylinders mentioned in the foregoing embodiments can be substituted with other appliances, for instance electromechanical devices. For such embodiments an electrohydraulic control system receiving signals from an electronic sensor of the steering handlebar position as well as a relevant hydraulic or an electromechanical actuators responsible for deflection of the rear angle are significant for adjustment of the ratio between the pivoting angle of the rear wheel and the turning angle enforced directly by the steering handlebar assembly. These components also enable change of that ratio by implementation of necessary software with no need to replace mechanical parts. Furthermore, hydraulic and/or electromechanical actuators can be combined with motors assigned to them and deflection of the rear wheel is carried out by these motors without any effort of a bicycle rider or forces applied to the steering handlebar assembly.

One more embodiment of the invention that is not illustrated in drawings comprises secondary means to change the ratio between the turning angle of the front wheel and the turning angle enforced directly by the steering handlebar assembly. If so, the steering handlebar assembly is not connected directly to the front wheel but the connection uses an intermediate component in the form of secondary means designed to change the ratio for the turning angle of the front wheel. Similarly to the previous embodiment, movements and position of the steering handlebar assembly can be detected by an electronic sensor. For such an embodiment the control system comprises an electronic sensor for the steering handlebar assembly position, an electrohydraulic control system attached to the bicycle frame, a hydraulic actuator linked to the front wheel and a hydraulic actuator linked to the pivoting mechanism for the rear wheel. In consequence, the position of the steering handlebar assembly is detected by and electronic sensor and relevant information is transmitted via a wired or wireless line to an electrohydraulic control system attached to the bicycle frame and intended to provide appropriate signals to hydraulic actuators responsible for execution of deflection movements by the front and rear wheels.

Furthermore, in further embodiment of the invention which might be applicable to all examples disclosed herein, the bicycle comprises a speedometer that is functionally coupled with the means to change the ratio for the pivoting angle of the rear wheel 5 and the reduction ratio between the pivoting angle of the rear wheel 5 and the turning angle of the steering handlebar assembly 3 depends on the bicycle speed.

In general one can assume that for bicycle speed less than 10 km/h the reduction ratio between the pivoting angle of the rear wheel 5 and the turning angle of the steering handlebar assembly 3 is preferably below 50% when the turning angle of the steering handlebar assembly does not exceed 10°, or may range from 10% to 90% for deflection angles of the steering handlebar from 10° to 40° and exceeds 80% when the deflection angle of the steering handlebar assembly is more than 40°. Moreover, for the bicycle speed exceeding 50 km/h the reduction ratio between the pivoting angle of the rear wheel 5 and the turning angle of the steering handlebar assembly 3 should be above 50% when the turning angle of the steering handlebar assembly is less than 10°, or may range from 60% to 95% for deflection angles of the steering handlebar from 10° to 40° and exceeds 80% when the deflection angle of the steering handlebar assembly is more than 40°.

For other speed intervals the reduction ratio adopts averaged values in between of the forgoing boundary limits. The table below comprises examples for the speed below 10 km/h.

| **Front wheel deflection angle in grades** | **Rear wheel deflection angle in grades** |
|---|---|
| 1 | 0.7 |
| 9 | 5.0 |
| 15 | 6.0 |
| 35 | 7.5 |
| 40 | 9.0 |
| 60 | 10.0 |

The next table comprises examples for the speed above 50 km/h.

| **Front wheel deflection angle in grades** | **Rear wheel deflection angle in grades** |
|---|---|
| 1 | 0.1 |
| 9 | 0.3 |
| 15 | 1.5 |
| 35 | 3.5 |
| 40 | 4.0 |
| 60 | 6.0 |

The foregoing embodiments of the invention are not intended to limit applicability of the invention, that with no major modifications can be applied to electric bicycles furnished with electric motors intended to drive the bicycle.

## Claims

1. A bicycle (1), having a frame (2) connected with a steering handlebar assembly (3), a front wheel (4), a rear wheel (5) and provided with a pivoting mechanism (10) for the rear wheel (5), whereas the steering handlebar assembly is functionally coupled to the front wheel (4) so that any movements of the steering handlebar assembly (3) lead to deflection of the front wheel (4) with reference to the longitudinal plane (A) of the frame (2), **characterized in that**, the steering handlebar assembly (3) is linked to the pivoting mechanism (10) of the rear wheel (5) so that the movements of the steering handlebar assembly (3) also lead to deflection of the rear wheel (5) with reference to the longitudinal plane (A) of the frame, whereas the deflection of the front wheel (4) is opposite to the deflection direction of the rear wheel (5) with reference to the same longitudinal plane (A) of the bicycle frame (2).

2. The bicycle according to Claim 1, **characterized in that**, the linkage between the steering handlebar assembly (3) and the pivoting mechanism (10) of the rear wheel (5) comprises means to change the ratio between the pivoting angle of the rear wheel (5) and the turning angle enforced directly by the steering handlebar assembly (3).

3. The bicycle according to Claim 2, **characterized in that**, the steering handlebar assembly (3) is linked to the pivoting mechanism (10) of the rear wheel by means of a set of ties (11, 15) and the means to change the ratio between the pivoting angle of the rear wheel (5) and the turning angle enforced directly by the steering handlebar assembly (3) contain articulated joints, rolls or cams (12).

4. The bicycle according to Claim 2, **characterized in that**, the means to change the ratio between the pivoting angle of the rear wheel (5) and the turning angle enforced directly by the steering handlebar assembly (3) are implemented as an electronic device.

5. The bicycle according to Claim 4, **characterized in that**, the means to change the ratio for the pivoting angle of the rear wheel (5) comprise an electronic sensor capable to detect position of the steering handlebar assembly (3).

6. The bicycle according to Claim 2, **characterized in that**, the means to change the ratio between the pivoting angle of the rear wheel (5) and the turning angle enforced directly by the steering handlebar assembly (3) are implemented as a hydraulic or an electrohydraulic or electromechanical devices.

7. The bicycle according to any Claims from 1 to 6, **characterized in that**, the linkage between the steering handlebar assembly (3) and the pivoting mechanism (10) for the rear wheel (5) comprises a reduction gear to change the ratio between the pivoting angle of the rear wheel (5) and the turning angle enforced directly by the steering handlebar assembly (3).

8. The bicycle according to any Claims from 2 to 7, **characterized in that**, reduction ratio between the pivoting angle of the rear wheel (5) and the turning angle of the steering handlebar assembly (3) exceeds 50% when the turning angle of the steering handlebar is less than 10°, ranges from 60% to 80% when the turning angle of the steering handlebar is from 10° to 40° and exceeds 80% when the turning angle of the steering handlebar is more than 40°.

9. The bicycle according to any Claims from 2 to 7, **characterized in that**, it comprises a speedometer that is functionally coupled with the means to change the ratio for the pivoting angle of the rear wheel (5) and the reduction ratio between the pivoting angle of the rear wheel (5) and the turning angle of the steering handlebar assembly (3) depends on the bicycle speed.

10. The bicycle according to Claim 9 **characterized in that**, for bicycle speed less than 10 km/h the reduction ratio between the pivoting angle of the rear wheel (5) and the turning angle of the steering handlebar assembly (3) is below 50% when the turning angle of the steering handlebar assembly does not exceed 10°, ranges from 10% to 90% for turning angle of the steering handlebar from 10° to 40°, and exceeds 80% when the turning angle of the steering handlebar assembly is more than 40°.

11. The bicycle according to Claim 9 or 10 **characterized in that**, for the bicycle speed exceeding 50 km/h the reduction ratio between the pivoting angle of the rear wheel (5) and the turning angle of the steering handlebar assembly (3) is above 50% when the turning angle of the steering handlebar assembly is less than 10°, ranges from 60% to 95% for turning angle of the steering handlebar from 10° to 40° and exceeds 80% when the turning angle of the steering handlebar assembly is more than 40°.

12. The bicycle according to Claim 1 or 2 or any of the Claims from 6 to 11 **characterized in that**, the steering handlebar assembly (3) is linked to the pivoting mechanism (10) of the rear wheel (5) by means of a hydraulic system.

13. The bicycle according to Claim 3 **characterized in that**, the steerer tube of the front fork (33) is linked by means of a set (12) of articulated joints and cams to a rigid tie (11) and the second set (13) of articulated joints and cams and the second rigid tie (15) are used as a linkage to the pivoting mechanism (10) of the rear wheel (5), whereas the set (12) of articulated j oints and cams is designed to adjust the ratio between the pivoting angle of the rear wheel (5) and the turning angle enforced directly by the steering handlebar assembly (3).

14. The bicycle according to any of Claims 1 to 13 **characterized in that**, the pivoting mechanism (10) of the rear wheel (5) comprises at least one hydraulic actuator and/or at least one electromagnetic device.

15. The bicycle according to any of Claims 1 to 14 **characterized in that**, the bicycle has secondary means to change the ratio between the turning angle of the front wheel and the turning angle of the steering handlebar assembly (3).
